# EUROPEAN PATENT APPLICATION

(11) **EP 4 822 058 A1**
(43) Date of publication of application: **14.10.2026**
(21) Application number: 25315126.0
(22) Date of filing: 08.04.2025
(51) Int. Cl.: C25B 1/04, C25B 15/02, C25B 15/08, C02F 1/461

(54) **WATER ELECTROLYSIS-BASED HYDROGEN PRODUCTION SYSTEM COMPRISING A BALANCING CONDUIT CONNECTING TWO GAS SEPARATORS**

(71) Applicant: John Cockerill Hydrogen France, 68700 Aspach-Michelbach (FR)
(72) Inventor: Neben, Matthias, 90150 FOUSSEMAGNE (FR); Heinke, Michael, 90150 FOUSSEMAGNE (FR)
(74) Representative: IP Trust

(57) **Abstract**

The invention relates to a water electrolysis-based hydrogen production system (1) comprising a stack (2) comprising at least one electrolytic cell, the stack (2) being traversed by a first electrolyte circuit (Circ(H2)) to collect hydrogen gas (G_H2) and a second electrolyte circuit (Circ(O2)) to collect oxygen gas (G_O2); a first separator (3a) disposed in the first electrolyte circuit (Circ(H2)) for separating hydrogen gas (G_H2) from the electrolyte, the first separator (3a) comprising a first vessel (Va) presenting a bottom (Ba); a second separator (3b) disposed in the second electrolyte circuit (Circ(O2)) for separating oxygen gas (G_O2) from the electrolyte, the second separator (3b) comprising a second vessel (Vb) having a bottom (Bb); a balancing conduit (4) fluidly connecting the first separator (3a) and the second separator (3b), the balancing conduit (4) presenting a first end (4a) opening into the first vessel and a second end (4b) opening into the second vessel. The first end (4a) and the second end (4b) of the balancing conduit (4) are positioned, respectively, at a first level (7a) above the bottom (Ba) of the first vessel and at a second level (7b) above the bottom (Bb) of the second vessel to prevent the complete drainage of electrolyte from the first separator (3a) or from the second separator (3b) through the balancing conduit (4).

## Description

### FIELD OF THE INVENTION

The technical domain of the invention is that of hydrogen production systems based on water electrolysis.

### BACKGROUND OF THE INVENTION

Water electrolysis-based hydrogen production systems are widely utilized for the production of hydrogen (H2) and oxygen (O2) gases through the electrolysis of water. This process involves the use of electrical energy to split watermolecules in an alkaline environment, where the electrolyte is typically a solution of potassium hydroxide (KOH) or sodium hydroxide (NaOH).

A water electrolysis-based hydrogen production system, as known in the state of art, comprises several essential components, including typically an alkaline water electrolyzer comprising a stack of electrolytic cells that drives the water-spitting reaction to produce hydrogen and oxygen, along with gas-liquid separators, a circulation pump, and a cooling system. Together, these elements ensure the efficiency, safety, and optimization of the overall operation. The gas-liquid separators maintain gas purity by separating the generated gases from the electrolyte, preventing cross-contamination. The circulation pump provides a consistent electrolyte flow through the cells, maintaining a balanced reaction. Meanwhile, the cooling system regulates the temperature of the stack and the electrolyte to prevent overheating and maintain stability of the occurring electrochemical reactions.

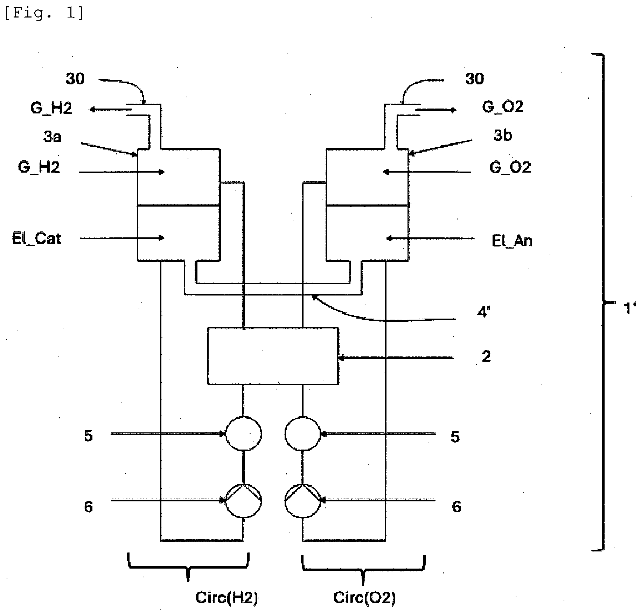

Figure 1 represents a water electrolysis-based hydrogen production system 1' according to the state of the art. As shown on this figure, such electrolysis system comprises a stack 2 of electrolytic cells.

As known in the state of art and illustrated in document EP4389936, the electrolytic cells of the stack 2 are equipped with cathodes and anodes, at the surfaces of which electrochemical reactions occur. The electrolysis is performed by flowing a direct current of electrons between an anode and a cathode, both immersed in an aqueous alkaline electrolyte.

At the cathode, electrons provided by the direct current react with water to produce hydrogen gas G_H2 and hydroxide ions within a first electrolyte circuit Circ(H2) according to the reaction:

*2H₂O + 2e⁻* → *H₂ + 20H⁻*

At the anode, the hydroxide ions release their electrons in excess to produce water and oxygen gas G_O2 within a second electrolyte circuit Circ(O2) according to the reaction: $2 {OH}^{-} \to \frac{1}{2} {O}_{2} + {H}_{2} O + 2 {e}^{-}$

Ionic conductivity is ensured by the aqueous alkaline electrolyte, usually an aqueous solution of potassium hydroxide (KOH) or sodium hydroxide (NaOH) . In a conventional implementation of alkaline hydrolysis, two fluidic circuits are employed, one bathing the anode and the other one bathing the cathode. The electrolyte bathing the anode is designated as "anolyte" El_An and the electrolyte bathing the cathode is designated as "catholyte" El_Cat.

Each of the two electrolyte circuits comprises a respective pump 6 to flow the electrolyte in the respective circuits and drive it through the stack 2.

Downstream of each pump 6 and upstream of the stack 2, the cooling system 5 regulates the temperature of the electrolyte and, consequently, of the stack 2 during operation. By regulating the temperature of the stack 2, the cooling system 5 prevents stack overheating and prolongs the lifespan of the components of the electrolysis system.

Downstream of the stack 2, upstream of the pumps 6 and disposed in respective electrolyte circuits, gas-liquid separators 3a and 3b, hereinafter referred to as "separators", are designed to separate the generated hydrogen and oxygen gases from the liquid electrolyte. Each separator comprises a vessel configured to ensure efficient phase separation, with the liquid electrolyte collected in the lower region of the vessel and the gas accumulated in the upper region of the vessel. The gases exit the separators via dedicated gas vents respectively located in the upper regions of the vessels and connected to collection conduits 30 for their further treatment.

Specifically, the mix formed by the catholyte and generated hydrogen gas G_H2 is pumped out of the stack 2 and goes through a first separator 3a, where the hydrogen gas G_H2 is separated from the catholyte El_Cat. The hydrogen gas G_H2 is then retrieved separately and exits the separator vessel through the H2 vent, while the catholyte El_Cat is collected in the lower region of the vessel of the separator 3a. Symmetrically, the mix formed by the anolyte El_An and generated oxygen gas G_O2 is pumped out of the stack 2 and goes through a second separator 3b where the oxygen gas G_O2 is separated from the anolyte El_An. The oxygen gas G_O2 is then retrieved separately and exits the separator vessel through the O2 vent, while the anolyte El_An is collected in the lower region of the vessel of the separator 3b.

For stable and safe operation of the electrolysis system, a balancing system is implemented to equilibrate the pressures in the two electrolyte circuits. The balancing system aims at maintaining a stable level of electrolyte in each lower region of the separator vessels and avoid excessive gas pressure in the upper regions. This system comprises a balancing conduit 4' connecting the two separators from the bottom of one vessel to the bottom of the other vessel. The balancing conduit 4' enables the transfer of electrolyte, that resides in the lower regions of the vessels, between the two vessels. It may also comprise sensors to monitor critical parameters, such as pressure or liquid levels, and valves that regulate the flow of electrolyte within the balancing circuit and the gas exiting the vessels, based on sensor data. These sensors and valves enable active control over the fluid flow, allowing finer regulation of electrolyte transfer between the two vessels. The balancing system is thus crucial for maintaining pressure equilibrium, preventing liquid imbalances, and ensuring the stable and efficient operation of the electrolysis process.

Existing designs, such as the system disclosed in CN117248220, employ a liquid level balancing valve controlled by signals detected by sensors within the balancing circuit. In this configuration, the balancing valve closes to enable independent pressure control of each vessel when the difference in electrolyte levels between the first and second vessels exceeds a predefined upper limit.

However, significant challenges arise in scenarios involving malfunctions in the level control system, such as sensor or a valve failure, or large pressure differences between the two vessels. In such cases, one vessel may be completely drained of its liquid through the balancing conduit into the other vessel. If a vessel is entirely emptied of electrolyte, gas may circulate in the electrolyte circuit and enter the stack, disrupting the cooling operations and leading to stack overheating. Such overheating can significantly reduce the efficiency of the system and potentially damage the stack. Additionally, the complete draining of one vessel can result in the overfilling of the other vessel with electrolyte. This excess electrolyte may escape through the gas vent, causing caustic release, equipment damage, operational inefficiencies, and gas contamination. Furthermore, cross-contamination of gases between the two vessels can occur, for example in the event of a vent blockage, posing risks such as evaporation of the electrolyte, overpressure, rupture of the separator, explosions, projection of metallic shrapnel, decreased efficiency and economic losses.

### OBJECT OF THE INVENTION

In view of the issues described above, the present invention aims to enhance the safety and reliability of water electrolysis-based hydrogen production systems, particularly in scenarios involving control malfunctions or significant pressure difference between the separators.

### SUMMARY OF THE INVENTION

To this effect, a first aspect of the invention relates to a water electrolysis-based hydrogen production system comprising: a stack comprising at least one electrolytic cell, the stack being traversed by a first electrolyte circuit to collect hydrogen gas and a second electrolyte circuit to collect oxygen gas; a first separator disposed in the first electrolyte circuit for separating hydrogen gas from the electrolyte, the first separator comprising a first vessel having a bottom; a second separator disposed in the second electrolyte circuit for separating oxygen gas from the electrolyte, the second separator comprising a second vessel having a bottom; and a balancing conduit fluidly connecting the first separator 3a and the second separator, the balancing conduit presenting a first end opening into the first vessel and a second end opening into the second vessel, with the first end and the second end of the balancing conduit positioned, respectively, at a first level above the bottom of the first vessel and at a second level above the bottom of the second vessel to prevent the complete drainage of electrolyte from the first separator or from the second separator through the balancing conduit.

A first advantage of this configuration, where the balancing conduit protrudes into the vessels, is that it ensures that both gas-liquid separators maintain a minimum liquid level critical for safe and stable operation.

A second advantage of the electrolysis system according to the invention is the prevention of several risks, such as gas circulation within the electrolyte circuit, which could lead to gas entering the stack, disrupting cooling, and causing stack overheating, thereby reducing efficiency and potentially damaging the stack.

Additionally, the configuration according to the invention prevents the overfilling of one vessel with excess electrolyte, which could escape through the gas vent, resulting in equipment damage, operational inefficiencies, and contamination of gas streams. Furthermore, maintaining balanced liquid levels prevents cross-contamination of hydrogen and oxygen between the vessels, which could otherwise lead to explosions, decreased efficiency, and economic losses. By addressing these issues, the configuration enhances the overall safety, efficiency, and stability of the electrolysis system and of the water electrolysis-based hydrogen production system as a whole.

According to further non limitative features of the first aspect of the invention, either taken alone or in any technically feasible combination:
- The region located below the first level of the first vessel corresponds to at least 5%, preferably between 10% to 30% and even more preferably at 20% of the volume of the first vessel and the part located below the second level of the second vessel (corresponds to at least 5%, preferably between 10% to 30% and even more preferably at 20% of the volume of the second vessel;
- The first level, the second level and an overall filling of the first and the second vessels are set so that a maximum volume of electrolyte flowing from the first vessel to the second vessel through the balancing conduit added to a volume of electrolyte already present in the second vessel reach maximum 100% of a maximum capacity of the second vessel;
- Each separator further comprises a level measuring device to provide a level of electrolyte in its vessel;
- The balancing conduit comprises at least one valve;
- The balancing conduit comprises a first ball valve disposed at the first end and a second ball valve at the second end of the balancing conduit;
- The balancing conduit comprises a first floating valve associated to the first vessel and a second floating valve associated to the second vessel;
- The balancing conduit comprises a central encapsulated floating valve;
- The balancing conduit comprises a pneumatic quick-acting shut-off valve;
- The first separator and the second separator are connected to a floating chamber which regulates the valve of the balancing conduit;
- The first separator is connected to a first floating chamber which is configured to regulate a first valve positioned in the balancing conduit, and wherein the second separator is connected to a second floating chamber which is configured to regulate a second valve positioned in the balancing conduit;

A second aspect of the invention relates to a method for preventing electrolyte imbalance in a water electrolysis-based hydrogen production system, the method comprising:
- positioning a first end of the balancing conduit at a first level above the bottom of the first vessel and a second end of the balancing conduit at a second level above the bottom of the second vessel to prevent the complete drainage of electrolyte from the first separator or from the second separator through the balancing conduit;
- regulating the electrolyte flow through a balancing conduit connecting the first separator and the second separator, the balancing conduit being equipped with at least one valve;
- monitoring the electrolyte levels in a first separator and a second separator using an electrolyte level monitoring system; and
- closing the valves of the balancing conduit when the electrolyte level in the first separator or the second separator reaches a predetermined level.

### FIGURES

Other features and advantages of the invention will become apparent from the detailed description of the invention that follows, with reference to the attached figures, in which:
[Fig. 1] Figure 1 shows the water electrolysis-based hydrogen production system according to the prior art.
[Fig. 2] Figure 2 shows the water electrolysis-based hydrogen production system according to the invention.
[Fig. 3] Figure 3 shows the water electrolysis-based hydrogen production system according to a mode of realization of the invention.
[Fig. 4] Figure 4 shows the water electrolysis-based hydrogen production system according to another mode of realization of the invention.
[Fig. 5] Figure 5 shows the water electrolysis-based hydrogen production system according to another mode of realization of the invention.
[Fig. 6] Figure 6 shows the water electrolysis-based hydrogen production system according to another mode of realization of the invention.
[Fig. 7] Figure 7 shows the water electrolysis-based hydrogen production system according to another mode of realization of the invention.
[Fig. 8] Figure 8 shows the water electrolysis-based hydrogen production system according to another mode of realization of the invention.
[Fig. 9] Figure 9 shows the water electrolysis-based hydrogen production system according to another mode of realization of the invention.
[Fig. 10] Figure 10 shows the water electrolysis-based hydrogen production system according to another mode of realization of the invention.

### DETAILED DESCRIPTION OF A SPECIFIC EMBODIMENT OF THE INVENTION

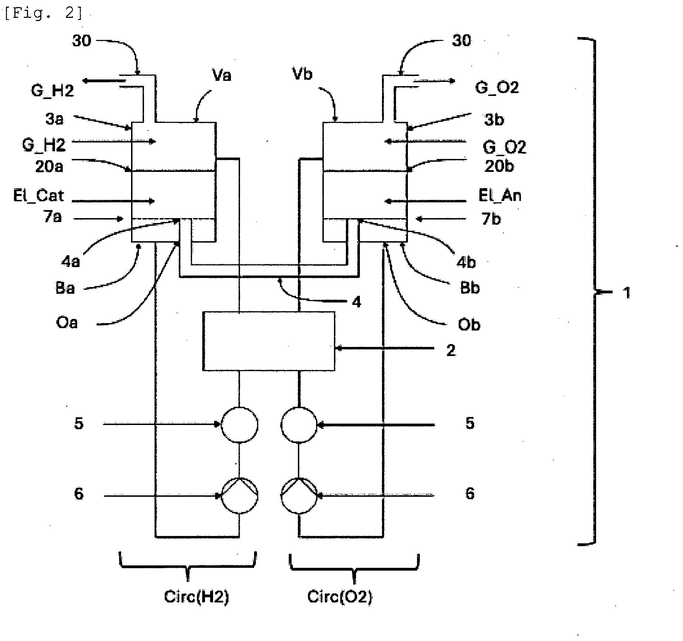

The invention relates to a water electrolysis-based hydrogen production system configured as illustrated in Figure 2 and detailed below.

The water electrolysis-based hydrogen production system 1 can present an architecture similar to the one described in the introductory part of this disclosure and which is briefly recalled here for the sake of completeness.

The water electrolysis-based hydrogen production system described in this invention, as illustrated in Figure 2, comprises a stack 2 of electrolytic cells that is powered by a direct current power source. A direct current of electrons flows between an anode and a cathode immersed in an aqueous alkaline electrolyte. At the cathode, electrons react with water to produce hydrogen gas G_H2 in a first electrolyte circuit Circ(H2). At the anode, oxygen gas G_O2 is produced within a second electrolyte circuit Circ(O2). A first separator 3a and a second separator 3b are positioned within their respective electrolyte circuits to separate the generated hydrogen and oxygen gases from the liquid electrolyte. The separators 3a and 3b comprise respective vessel Va and Vb, forming reservoirs for the electrolyte and the separated gas.

A balancing system is configured to maintain a stable level of electrolyte in each of the separator vessels, with a level 20a representing the level of electrolyte El_Cat in the first separator 3a and a level 20b representing the level of electrolyte El_An in the second separator 3b, while also preventing excessive gas pressure.

A level of electrolyte can be defined as indicating a volume that would be occupied by a liquid reaching this level. This level can, for example, be expressed as a percentage of the total volume of a separator vessel. At the bottom of the vessel, the level of electrolyte is 0%, indicating no electrolyte is present. At the top of the vessel, the level is 100%, representing the vessel's maximum capacity. For instance, the balancing system may be configured to maintain a level of electrolyte of 60%, meaning the electrolyte occupies 60% of the vessel's total volume.

A level of electrolyte can also be indicated by the height of the liquid/gas interface in the vessel, as measured from the lowest part of the vessel.

It is assumed in the present description that the first vessel and the second vessel have the same shape (for instance cylindrical) and dimensions, but this is not a mandatory feature.

The first and second electrolyte circuits are respectively connected to upper portions (on the top or on the side) of the first and second vessels to pour out from the stack the electrolyte into the first and second vessels. The electrolyte circuits are also connected to the respective bottoms of the first and second vessels (the electrolyte flows through openings Oa and Ob formed in the bottoms Ba and Bb of respective vessels Va and Vb), enabling the electrolyte to be sent back toward the stack 2 by respective circulation pumps 6. This number of circulation pumps is not limited, as the system can accommodate a different number of circulation pumps, for example one circulation pump, depending on the application.

Each circuit further comprises at least a heat exchanger forming a cooling system 5 that regulates the temperature of the electrolyte and of the stack 2.

The electrolyte flowing in the first and second electrolyte circuits is an aqueous alkaline electrolyte, typically a solution of potassium hydroxide (KOH) or sodium hydroxide (NaOH). Alternatively, the electrolyte may be sodium chloride (NaCl), zinc hydroxide (ZnOH) or any other chemical compounds known to the person skilled in the art as an electrolyte in an electrolyzer.

The water electrolysis-based hydrogen production systems 1 comprises also a balancing conduit 4 fluidly connecting the first separator 3a and the second separator 3b through the bottom of their respective vessels. The balancing conduit 4, which may take the form of a tube, comprises two ends.

According to the invention, a first end 4a of the balancing conduit 4 is opened into the first vessel and positioned at a first level 7a at a first height above the bottom of the first vessel. Similarly, a second end 4b of the balancing conduit 4 is opened into the second vessel and positioned at a second level 7b at a second height above the bottom of the second vessel. The first height and the second height can be identical or different but are greater than zero, as measured from the lowest positions of the bottoms of the vessels. The first height and the second height can be respectively defined as (i) heights of levels indicating that a volume of at least 5%, preferably between 10% to 30% of the vessels contain liquid electrolyte when the liquid electrolyte reaches these levels or (ii) as levels that are at least 5%, preferably between 10% to 30% of inner heights of the respective vessels.

Said differently, the balancing conduit first and second ends protrude inside the first and second vessel. This configuration prevents the complete drainage of electrolyte from either separator through the balancing conduit 4, since the level of electrolyte inside a vessel cannot decrease below the level at which the balancing conduit end is positioned. Since a minimum level of electrolyte is ensured in the vessel, and since the electrolyte is taken from the vessel through an opening in the bottom thereof, gases from the separator cannot be drawn downstream of the electrolyte circuit into the stack 2 and a flow of electrolyte into the first and second electrolyte circuit is maintained. Consequently, an effective heat management of the stack 2 can be preserved anytime passively, independently of the proper functioning of an active control system of electrolyte flow through the balancing conduit 4. The first level 7a and the second level 7b can be the same level or can be different from each other.

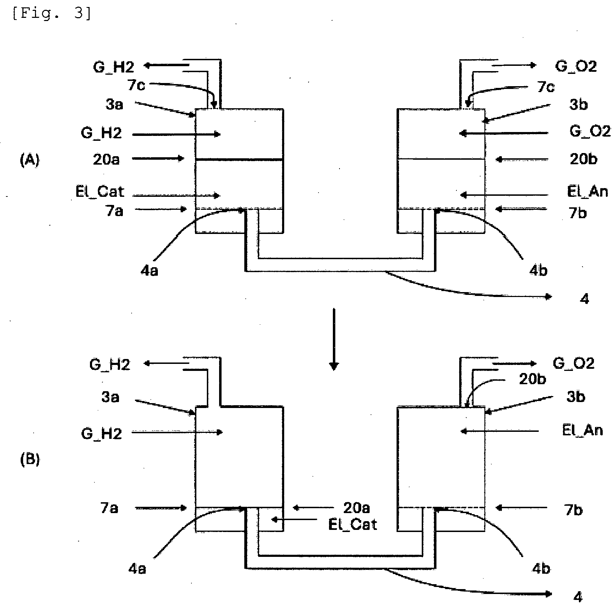

In an advantageous configuration illustrated in Figure 3, the first level 7a, the second level 7b and the overall filling of the vessels are selected such that no given vessel can be overfilled with the electrolyte contained in the other vessel flowing into the given vessel. In other terms, in this particular configuration, the first level 7a and the second level 7b are selected so that if the level of electrolyte in one vessel drops to level 7a or 7b, the level of electrolyte in the other vessel will rise to level 7c to fill it completely without causing an overflow. More generally, the first level 7a, the second level 7b and the overall filling of the vessels are selected such that one of the vessel cannot be overfilled due the electrolyte contained in the other vessel flowing into the one of the vessels: for example, even when the level of electrolyte in vessel Va is as low as level 7a, the electrolyte in vessel cannot be overfilled and spill liquid electrolyte into the O2 gas vent, as illustrated in situation (B) of Figure 3.

For example, when the balancing system is configured to maintain an electrolyte level of 60% in each vessel, and that the first and second separators have the same volume, as illustrated by the gas/liquid interfaces 20a and 20b of Fig. 3(A), the first and second levels may be selected so that the region of the first vessel located below the first level 7a corresponds to at least 20% of the volume of the first vessel and the region of the second vessel located below the second level 7b corresponds to at least 20% of the volume of the second vessel. This configuration ensures that no more than 40% of electrolyte in one vessel can be drained through the balancing conduit 4 to the other vessel, as illustrated in the worst-case situation of Fig. 3(B). Consequently, no vessel can be overfilled: at most, one vessel can be filled up to 100% of its capacity.

This prevents excess electrolyte from escaping through the gas vent, thereby avoiding equipment damage, operational inefficiencies and gas contaminations. It also eliminates the risk of cross-contamination between gases, avoiding risks as explosions, reduced inefficiencies and economic losses.

When the level 20a of electrolyte in the first vessel is at or below the first level 7a, the first end 4a of the conduit 4 is open to the hydrogen gas residing in the vessel. Similarly, when the level of electrolyte 20b of the second vessel is at or below the second level 7b, the second end 4b of the conduit 4 is open to the oxygen gas residingin the vessel.

To avoid the possibility for one gas to circulate from one vessel to the other through the balancing conduit 4, and according to a preferred embodiment, the balancing conduit 4 can optionally be equipped with at least one valve to close the conduit to avoid gas circulation from one vessel to the other. More specifically, the first and second separators can comprise a flow control system configured to adjust the levels of electrolyte within the vessels by commanding one or more valves that control flow of liquid through the balancing line 4.

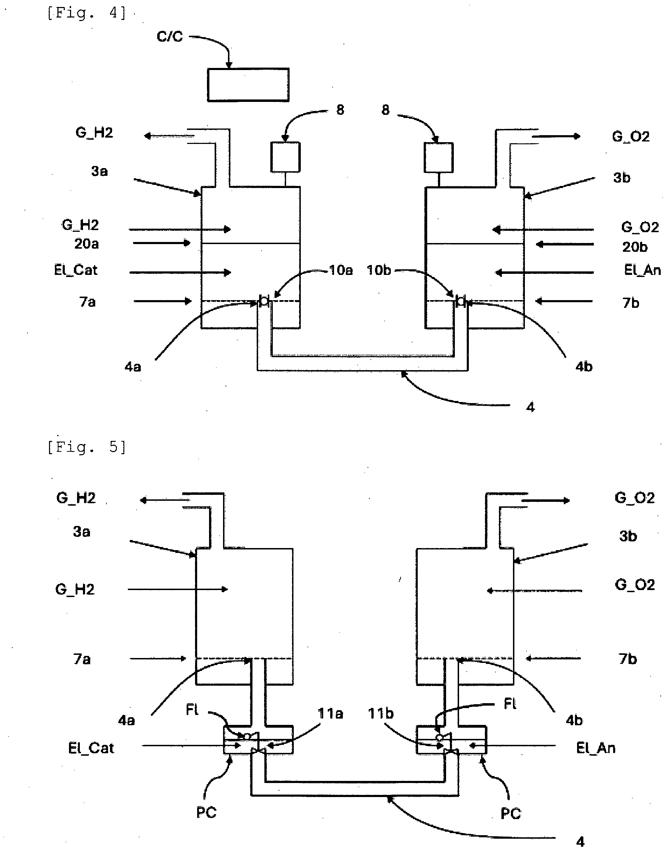

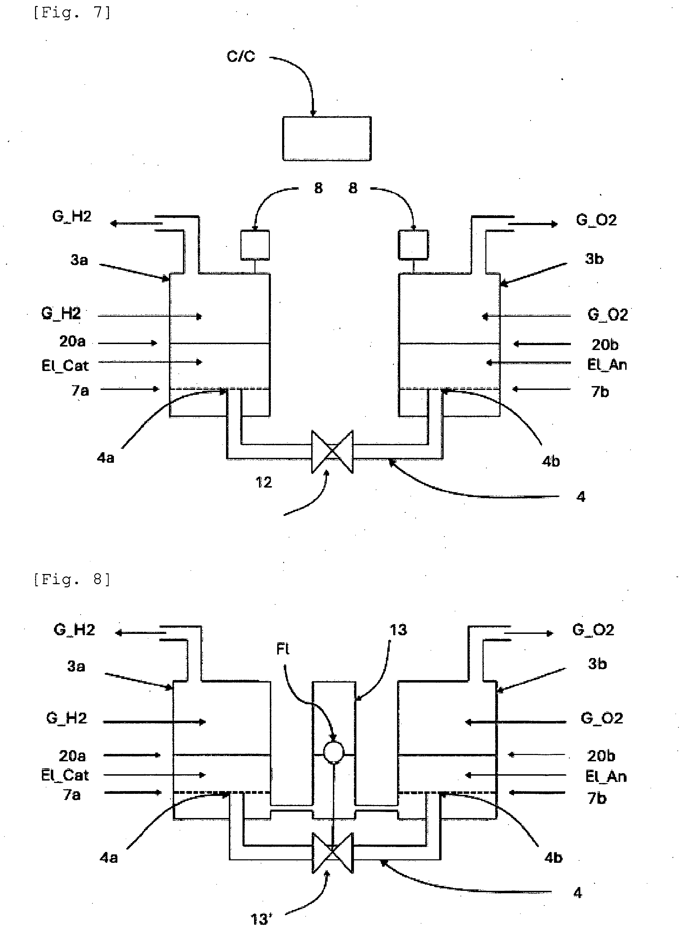

Figures 4 and 7 are examples that illustrate a first category such flow control systems, comprising level measuring devices 8 each configured to measure the level of liquid electrolyte in a respective one of the vessels, at least one valve configured to control flow of electrolyte through the balancing conduit 4, and a control/command electronic circuit C/C to which the measuring devices 8 and the valves are functionally connected. The electronic circuit C/C is configured to control the valves as a function of measurements of the devices 8, preferably in real time. The balancing valve may be a ball valve, a pneumatic quick-acting shut off valve or any other device fulfilling the same function.

Figures 5, 6, 8 and 9 are example that illustrate a second category of such flow control systems, comprising at least one valve configured to control flow of electrolyte through the balancing conduit 4, this at least one valve being controlled by means of a floating device in accordance with a level of a liquid/gas interface in a recipient, such as a floating valve.

In the example of Figure 4, a level measuring device 8 are used to monitor the liquid level in the respective vessels Va and Vb. Examples of such measuring devices include ultrasonic level sensors, pressure-based sensors, radar level sensors, and optical sensors.

The balancing conduit 4 comprises two ball valves. A first ball valve 10a is positioned at the first end 4a of the balancing conduit 4, and a second ball valve 10b is positioned at the second end 4b of the balancing conduit 4.

The ball valves operate in response to signals detected by the level measuring devices 8, as controlled by a controller circuit C/C that receive measurement signals from the level measuring devices 8 and send command signal to the balancing valves. For example, the balancing valve of one vessel is closed if the level of electrolyte in this vessel is under a predetermined limit value. It prevents electrolyte of its vessel from draining further through the balancing conduit 4. Thus, the flow control system is configured in such a manner that, when one of the level measuring devices 8 detects that electrolyte in a vessel has fallen below a limit setting value, a signal transmitting this information is sent from the level measuring device 8 to the controller circuit C/C that sends in response a command signal to the corresponding ball valve, causing it to rotate to close, blocking electrolyte flow through the balancing conduit 4.

In the example illustrated by Figure 5, the balancing conduit 4 comprises floating valves. A first floating valve 11a is associated with the first vessel, while a second floating valve 11b is associated with the second vessel, the valves being within enlargements of the balancing conduit 4 forming protective chambers of the valves A first floating valve 11a may be encapsulated and positioned alongside the first vessel. Similarly, a second encapsulated floating valve 11b is installed alongside the second vessel. The floating valves are each equipped with a float FL that follow the movement of the liquid/gas level with their respective protective chamber. When the liquid level exceeds a setting value, the float reaches a given height, opening the valve to allow the flow of electrolyte through the balancing conduit 4. the flow control system is configured in such a manner that, when the electrolyte level falls below the setting value, the float goes under the setting value, causing the valve to close and prevent further flow through the balancing conduit 4. Throughout this document, by "encapsulated floating valve", it is meant "enclosed floating valve within a protective chamber". The protective chambers are each indicated as PC in the figures.

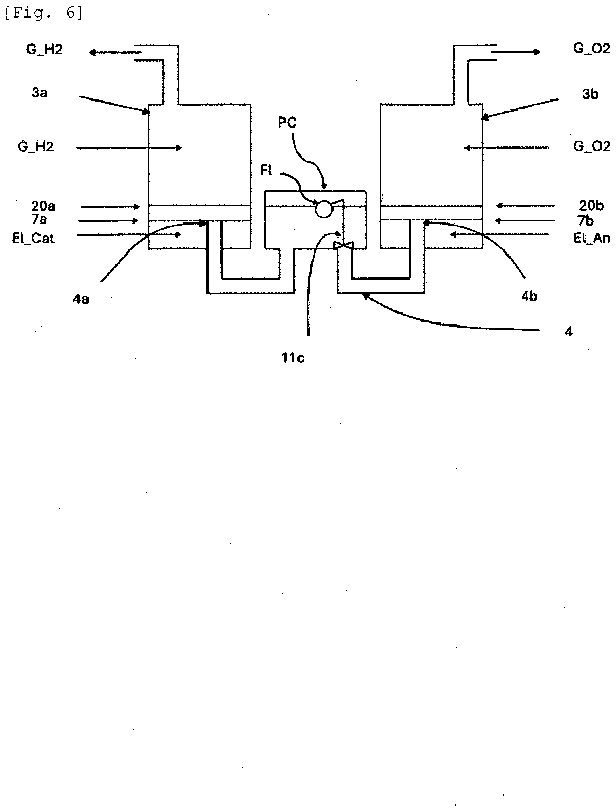

In the example illustrated by Figure 6, the balancing conduit 4 comprises a central encapsulated floating valve 11c. Such valve is encapsulated and positioned along the balancing line, for example at the center of the balancing line, at a height such that the floating valve closure can be triggered by a relevant (determined beforehand by the practitioner) variation of level of the electrolyte in the vessels Va and Vb. For example, the protective chamber in which is situated the valve 11c can be vertically centered at the levels 7a and/or 7b. The flow control system is configured in such a manner that, when the electrolyte level in one vessel drops below a setting value, the float FL of the floating valve descends below a given level, causing the valve 11c to close and prevent further flow through the balancing conduit 4.

In another example, as illustrated by Figure 7, the balancing conduit 4 comprises a pneumatic quick-acting shut-off valve 12 which uses compressed air to rapidly open or close the valve. The pneumatic quick acting shut-off valve used is mounted in the balancing line, for example in the middle of the balancing line. The flow control system is configured in such a manner that, when the level measuring device 8 detects that the level of electrolyte in one vessel is under the limit setting value, a signal transmitting this information is sent from the level measuring device 8 to the controller circuit C/C that sends in response a command signal to the valve 12, causing it to close under the action of a compressed air pulse to prevent the flow of electrolyte through the balancing conduit 4.

In another example, as illustrated by Figure 8, a first separator 3a and a second separator 3b are connected to a centrally arranged floating chamber 13 via feed lines. The floating chamber 13 is configured to have an electrolyte level identical to the levels of the liquid levels of both separators and contain a float FL that is configured to control a valve 13' centrally within the balancing conduit 4, for example in the middle of the balancing circuit. The float may be set so as to induce the valve 13' to close when the level of electrolyte 20a of the first vessel is at or below the first level 7a and the level of electrolyte 20b of the second vessel is at or below the second level 7b, optionally through a mechanism transmitting the movement of the float to the valve.

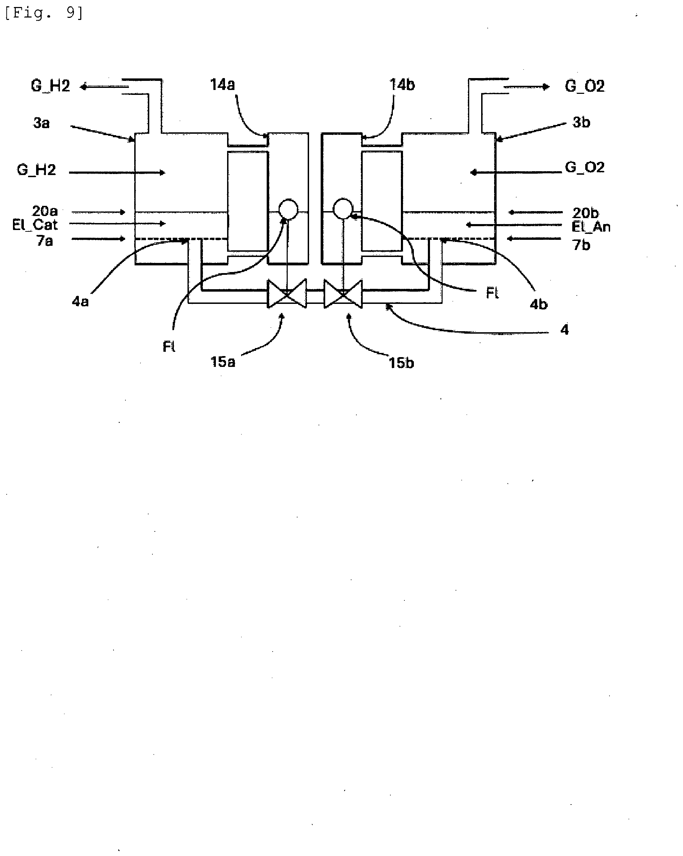

In another example, as illustrated by Figure 9, a first separator 3a is connected to a first floating chamber 14a which is configured to receive a first float FL configured to regulate a first valve 15a positioned in the balancing conduit 4, and wherein a second separator 3b is connected to a second floating chamber 14b which is configured to receive a second float Fl configured to regulate a second valve 15b positioned in the balancing conduit 4, such that the first and the second valves operate independently, controlling the electrolyte flow between the separators based on the electrolyte levels in their respective floating chambers.

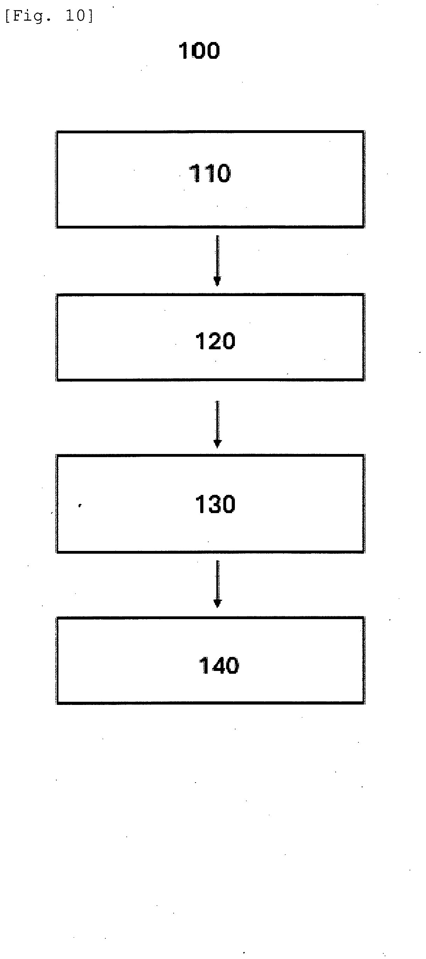

The electrolysis system described above can be employed, as illustrated by Figure 10, in a method 100 to prevent electrolyte imbalance.

At a step 110, a balancing conduit 4 is positioned so that a first end 4a of the balancing conduit 4 is at a first level 7a above the bottom of the first vessel and a second end 4b of the balancing conduit 4 is at a second level 7b above the bottom of the second vessel to prevent the complete drainage of electrolyte from the first separator 3a or from the second separator 3b through the balancing conduit 4.

At a step 120, the electrolyte flow is regulated through such balancing conduit 4. The balancing conduit is preferably equipped with at least one valve, as illustrated in any one of the Figures 4 to 9.

At a step 130, the electrolyte levels in a first separator 3a and a second separator (3b) is monitored using a level monitoring system such as at least a float (Fl) or a level measuring device (8), as explained hereabove.

At a step 140, in response to the monitoring of the electrolyte levels, the at least one valve closes, for example when at least one of the electrolyte levels reaches a predetermined threshold.

Each of the examples mentioned in this document can be freely combined within technical limits understood by the practitioner in the field of the invention.

The invention is not limited to water alkaline electrolyzers and can be applied to other types of electrolyzers, such as Proton Exchange Membrane (PEM) electrolyzers, Anion Exchange Membrane (AEM), or any other electrolyzers that comprise or can be configured to comprise liquid-gas separators and balancing conduit. These technologies also benefit from liquid-gas separation and balancing systems to ensure efficient, stable, and safe operation across various electrolysis processes.

Other variations to the disclosed examples can be understood and effected by those skilled in the art in practicing the claimed invention, from a study of the drawings, the disclosure, and the appended claims.

## Claims

1. A water electrolysis-based hydrogen production system (1) comprising:
- a stack (2) comprising at least one electrolytic cell, the stack (2) being traversed by a first electrolyte circuit (Circ(H2)) to collect hydrogen gas (G_H2) and a second electrolyte circuit (Circ(O2)) to collect oxygen gas (G_O2);
- a first separator (3a) disposed in the first electrolyte circuit (Circ(H2)) for separating hydrogen gas (G_H2) from the electrolyte, the first separator (3a) comprising a first vessel (Va) having a bottom (Ba);
- a second separator (3b) disposed in the second electrolyte circuit (Circ(O2)) for separating oxygen gas (G_O2) from the electrolyte, the second separator (3b) comprising a second vessel (Vb) having a bottom (Bb);
- a balancing conduit (4) fluidly connecting the first separator (3a) and the second separator (3b), the balancing conduit (4) presenting a first end (4a) opening into the first vessel and a second end (4b) opening into the second vessel,
**characterized by** the first end (4a) and the second end (4b) of the balancing conduit (4) being positioned, respectively, at a first level (7a) above the bottom (Ba) of the first vessel and at a second level (7b) above the bottom (Bb) of the second vessel to prevent the complete drainage of electrolyte from the first separator (3a) or from the second separator (3b) through the balancing conduit (4).

2. A water electrolysis-based hydrogen production system according to the preceding claim, wherein the region located below the first level (7a) of the first vessel (Va) corresponds to at least 5%, preferably between 10% to 30% and even more preferably at 20% of the volume of the first vessel (Va) and the part located below the second level (7b) of the second vessel (Vb) corresponds to at least 5%, preferably between 10% to 30% and even more preferably at 20% of the volume of the second vessel (Vb).

3. A water electrolysis-based hydrogen production system according to any preceding claim, wherein the system is configured in such a manner that the first level (7a), the second level (7b) and an overall filling of the first and the second vessels are set so that a maximum volume of electrolyte flowing from the first vessel to the second vessel through the balancing conduit (4) added to a volume of electrolyte already present in the second vessel reach maximum 100% of a maximum capacity of the second vessel.

4. A water electrolysis-based hydrogen production system according to any preceding claims, wherein each separator further comprises a level measuring device (8) to provide a level of electrolyte in its vessel.

5. A water electrolysis-based hydrogen production system according to any preceding claims, wherein the balancing conduit (4) comprises at least one valve.

6. A water electrolysis-based hydrogen production system according to the preceding claim, wherein the balancing conduit (4) comprises a first ball valve (10a) disposed at the first end (4a) and a second ball valve (10b) at the second end (4b) of the balancing conduit (4).

7. A water electrolysis-based hydrogen production system according to claim 5, wherein the balancing conduit (4) comprises a first floating valve (11a) associated to the first vessel (Va) and a second floating valve (11b) associated to the second vessel (Vb).

8. A water electrolysis-based hydrogen production system according to claim 5, wherein the balancing conduit (4) comprises a central encapsulated floating valve (11c).

9. A water electrolysis-based hydrogen production system according to claim 5, wherein the balancing conduit (4) comprises a pneumatic quick-acting shut-off valve (12).

10. A water electrolysis-based hydrogen production system according to claim 5, wherein the first separator (3a) and the second separator (3b) are connected to a floating chamber (13) which regulates the valve (13') of the balancing conduit (4).

11. A water electrolysis-based hydrogen production system according to claim 5, wherein the first separator (3a) is connected to a first floating chamber (14a) which is configured to regulate a first valve (15a) positioned in the balancing conduit (4), and wherein the second separator (3b) is connected to a second floating chamber (14b) which is configured to regulate a second valve (15b) positioned in the balancing conduit (4).

12. A method (100) for preventing electrolyte imbalance in a water electrolysis-based hydrogen production system (1) according to any preceding claims, the method comprising:
- positioning (110) a first end (4a) of the balancing conduit (4) at a first level (7a) above the bottom of the first vessel (Va) and a second end (4b) of the balancing conduit (4) at a second level (7b) above the bottom of the second vessel (Vb) to prevent the complete drainage of electrolyte from the first separator (3a) or from the second separator (3b) through the balancing conduit (4);
- regulating (120) the electrolyte flow through a balancing conduit (4) connecting the first separator (3a) and the second separator (3b), the balancing conduit (4) being equipped with at least one valve;
- monitoring (130) the electrolyte levels in a first separator (3a) and a second separator (3b) using an electrolyte level monitoring system (8, FL); and
- closing (140) the valves of the balancing conduit (4) when the electrolyte level in the first separator (3a) or the second separator (3b) reaches a predetermined level.
